# EUROPÄISCHE PATENTSCHRIFT

(11) **EP 1 170 063 B1**
(45) Veröffentlichungstag und Bekanntmachung des Hinweises auf die Patenterteilung: **28.06.2006**
(21) Anmeldenummer: 01121654.6
(22) Anmeldetag: 01.10.1997
(51) Int. Cl.: B05C 3/10, B65G 49/04

(54) **Vorrichtung zur Oberflächenbehandlung von Werkstücken, insbesondere Fahrzeugkarosserien**
Device for workpiece surface processing, especially automobile bodies
Dispositif de traitement des surfaces de pièces, notamment de carrosseries

(30) Priorität: 04.10.1996 DE 19641048
(43) Veröffentlichungstag der Anmeldung: 09.01.2002
(62) Teilanmeldung aus: 97909346.5
(73) Patentinhaber: ABB FLÄKT AB, 120 86 Stockholm (SE)
(72) Erfinder: Kreuzer, Bernd, D-36341 Lauterbach/Maar. (DE)
(74) Vertreter: HOFFMANN EITLE

(56) Entgegenhaltungen:
- DE-A- 1 922 751
- DE-A- 2 512 762
- DE-A- 2 901 027
- GB-A- 1 019 887
- US-A- 2 598 201

## Beschreibung

### Technisches Gebiet

Die Erfindung betrifft eine Vorrichtung zur Oberflächenbehandlung von Werkstücken zur Durchführung eines Verfahrens zum Ein- und Ausbringen von Werkstücken, insbesondere Fahrzeugkarosserien, in bzw. aus einem Behälter oder einer Behandlungskabine, wobei im Behälter die Werkstücke entweder in gasförmiger Umgebung behandelt wie beispielsweise pulver- oder naßlackiert werden oder der Behälter ein mit einem zur Oberflächenbehandlung der Werkstücke geeigneten flüssigen Medium gefülltes Tauchbecken ist.

Bei den erfindungsgemäßen Gegenständen werden die Werkstücke bzw. Fahrzeugkarosserien kontinuierlich zu einem Behandlungsbereich wie ein Behandlungsbad, eine Behandlungskabine etc. translatorisch bewegt und bei Beibehaltung dieser Bewegung in bzw. aus dem Behandlungsbereich ein- bzw. austransportiert.

### Stand der Technik

Vorrichtungen zur Oberflächenbehandlung einer oder mehrerer Fahrzeugkarosserien werden allgemein in kontinuierlich und nicht kontinuierlich fördernde Vorrichtungen unterteilt.

Bei den nicht kontinuierlich fördernden Anlagen, sogenannten Taktanlagen, werden die Fahrzeugkarosserien auf Objektträgern nacheinander über hintereinander angeordnete Tauchbecken gefahren und dort gestoppt. Durch Hebe- oder Drehvorrichtungen werden die Fahrzeugkarosserien in ein zur Oberflächenbehandlung geeignetes Badmedium in dem Tauchbecken eingetaucht und nach der Prozeßzeit wieder herausgehoben. Diese Anlagen kommen ohne Ein- und Auslaufbereich aus, so daß die Tauchbecken der Behandlungsbäder kürzer als bei kontinuierlich fördernden Anlagen sind. Diese Anlagen können jedoch nur bei kleinen Produktionsraten eingesetzt werden, da die Anlagenkapazität von der gewünschten Prozeßzeit abhängig und somit stark eingeschränkt ist. Somit ist das Einsatzgebiet derartiger Anlagen begrenzt.

Eine Drehvorrichtung für taktweise arbeitende Anlagen ist aus der DE 43 04 145 C1 bekannt. Hierin ist eine über einem Tauchbecken fest angebrachte Drehvorrichtung offenbart, an die wenigstens eine Fahrzeugkarosserie befestigbar ist. Durch Drehung um ungefähr 180° der Drehvorrichtung wird eine Fahrzeugkarosserie in ein Behandlungsbad eingetaucht und durch eine weitere Drehung aus diesem herausgeführt.

Bei den kontinuierlich fördernden Anlagen werden Fahrzeugkarosserien kontinuierlich längs der aneinander gereihten Behandlungsbäder transportiert und in bzw. aus dem Behandlungsbad durch Absenk- bzw. Anhebmittel ein- bzw. aus dem Badmedium geführt. Aufgrund der kontinuierlichen Förderung ist bei diesen Anlagen der Ein- bzw. Ausgangsbereich eines Behandlungsbades schräg auszubilden. Somit benötigt jedes Tauchbecken einen längeren Ein- und Auslaufbereich, was zu einer erheblichen Verlängerung eines Tauchbeckens und somit der gesamten Anlage führt. Desweiteren ist mit den bekannten Absenkmitteln nicht gewährleistet, daß Lufteinschlüsse in den im Behandlungsbad eingetauchten Werkstücken verbleiben. Insbesondere beim Eintauchen von Fahrzeugkarosserien in das Behandlungsbad tritt dieses Problem aufgrund der konstruktiv bedingten Hohlräume extrem auf. Beim Stand der Technik sind somit zusätzliche Maßnahmen zwingend notwendig, um Lufteinschlüsse zu reduzieren. So wird beispielsweise in der GB 1 434 348 vorgeschlagen, eine abgesenkte und in das Behandlungsbad eingetauchte Fahrzeugkarosserie hin und her zu bewegen.

Eine kontinuierlich fördernde Anlage zum Führen von Werkstücken in galvanischen Metallisierungs- und Verchromungsanlagen ist aus der deutschen Auslegeschrift 25 12 762 bekannt. Bei der hieraus bekannten Anlage handelt es dich um eine umlaufende Fördereinrichtung, die das zu behandelnde Werkstück kontinuierlich transportiert. Die Werkstücke werden beim Umlauf der Fördereinrichtung selbsttätig jeweils in einen Behälter eingetaucht, darunter unter Fortsetzung der Bewegung geführt, aus dem Behälter herausbewegt und erneut wieder in den nächsten Behälter eingetaucht. Um ein Eintauchen oder Austauchen der Werkstücke herbeizuführen, werden verschiedene Möglichkeiten genannt.

Zum einen sind Werkstückhalter durch Nocken oder aber durch Rampen bzw. schräg nach unten verlaufende Flächen drehbar. Jedoch wird beim weiteren Fortbewegen eines derartigen Werkstückhalters nur die Drehung in Gang gesetzt, der weitere Eindrehvorgang erfolgt lediglich unter Einwirkung der Schwerkraft ungesteuert. Eine derartige Einrichtung weist den Nachteil auf, daß schwerere Werkstücke unkontrolliert in ein Behandlungsbad fallen, was bei größeren, weitaus schwereren und empfindlicheren Werkstücken wie Fahrzeugkarosserien absolut ungeeignet ist. Des weiteren ist die hierin beschriebene Anlage speziell auf die Ausgestaltung mit Stromführungsmitteln abgestellt, die gleichzeitig als Betätigungselement zum Ingangbringen der Drehung eines Werkstückhalters dienen. Durch den unkontrollierten und somit hinsichtlich Zeit und Ort nicht vorbestimmten Drehvorgang ist es auch nicht möglich, die Ein- und Ausgangsbereiche der einzelnen Tauchbecken zu minimieren. Darauf zielt die hierin offenbarte Anlage auch nicht ab.

Schließlich ist aus der deutschen Offenlegungsschrift 29 01 027 eine Behälterdrehvorrichtung bekannt, bei der Behälter, vorzugsweise Flaschenbehälter, selbständig und ohne manuelle Einwirkung gedreht werden sollen. Sie weist Transporteinrichtungen auf, Mitnehmer, die in einer Halterung drehbar gelagert sind, sowie eine Steuerkurve, die die Mitnehmer so steuert, daß die Mitnehmer die Behälter festhalten. Dabei greifen mit den Mitnehmern verbundene Kettenräder in Verzahnungen ein. Die Anordnung ist derart, daß die Kettenräder, Mitnehmer und Behälter durch Eingriff mit den Verzahnungen verdreht werden. Bei der hierin gezeigten Vorrichtung ist nur das Drehen mittels Kettenrädern offenbart. Der Behälter soll auch nur gedreht werden, damit verschiedene Behhälterteile besser zugänglich sind. Ein Ein- oder Ausbringvorgang durch Drehung ist weder dargestellt noch in irgendeiner Weise angedeutet.

### Darstellung der Erfindung

### Technisches Problem

Das der Erfindung zugrunde liegende technische Problem besteht darin, eine Vorrichtung zur Oberflächenbehandlung von Werkstücken zu schaffen, bei der zum einen die Behandlungsbereiche in den Abmessungen minimiert werden können, zum anderen auch hohe Produktionsraten erzielbar sind.

### Lösung des technischen Problems

Dieses technische Problem wird durch eine Vorrichtung mit den Merkmalen des Anspruchs 1 gelöst.

Der Erfindung liegt der Gedanke zugrunde, während einer kontinuierlichen Bewegung der in die Behandlungsbereiche einzubringenden Werkstücke diese am Randbereich eines Behandlungsbereiches gleichzeitig einer gesteuerten und vollständig geführten Drehbewegung um eine quer zur kontinuierlichen Bewegungsrichtung der Werkstücke liegenden Drehachse zu drehen. Durch die erstmalige Abstimmung der kontinuierlichen Bewegung der Werkstücke längs der Behandlungsbereiche und der gleichzeitigen vollständig geführten Drehbewegung derselben um die quer zur Transportrichtung liegenden Drehachse ist das Ein- bzw. Ausdrehen der Werkstücke, insbesondere Fahrzeugkarosserien, in bzw. aus einem Behandlungsbereich derart genau führbar, daß die Ein- bzw. Ausgangsbereiche jeweils eines Behandlungsbereiches mit senkrecht stehenden bzw. nahezu senkrecht stehenden Stirnwänden versehen werden kann. Somit kann die Länge jedes einzelnen Behandlungsbereiches auf ein Minimum reduziert werden. Gleichzeitig wird hiermit die Gesamtlänge einer Anlage mit mehreren hintereinander angeordneten Behandlungsbereichen, wie insbesondere einer Anzahl aneinander gereihter Behandlungsbäder minimiert. Dieser Verkürzung beträgt etwa zwanzig Prozent bei einer Kapazität von hundert Fahrzeugkarosserien pro Stunde gegenüber herkömmlichen kontinuierlich fördernden Anlagen. Erstmals werden somit die Vorteile einer kontinuierlich fördernden Anlage mit den aus dem Stand der Technik bekannten Vorteilen einer Drehvorrichtung vereint.

Durch den Eindrehvorgang werden bei aus einem flüssigen Medium bestehenden Behandlungsbad Luftblasen bereits beim Eintauchen der Werkstücke weitgehend vermieden. Außerdem können aber zusätzlich auch bei eingetauchtem Werkstück durch weiteres Bewegen des Werkstücks im Behandlungsbad die möglicherweise durch den Behandlungsprozeß hervorgerufenen Lufteinschlüsse reduziert werden. Zudem werden Schmutzeinschlüsse auf horizontalen Flächen verringert, weil die Fahrzeugkarosserien über und im Bad gedreht werden.

Bei der erfindungsgemäßen Vorrichtung ist lediglich ein minimaler Sicherheitsabstand zwischen dem in das Behandlungsbereich einzubringenden Werkstück und den Stirnwänden des Behandlungsbereiches bzw. des Tauchbeckens vorzusehen. Um eine minimale Gesamtlänge des Behandlungsbereiches zu gewährleisten, ist dann unter Berücksichtigung des Sicherheitsabstandes die Drehgeschwindigkeit und Bewegungsgeschwindigkeit so aufeinander abzustimmen, daß das Vorderteil des Werkstücks nach Beendigung des Drehvorgangs unter Beachtung des Sicherheitsabstandes an der ersten Stirnwand bzw. beim Ausdrehvorgang an der zweiten Stirnwand positioniert ist. Durch Berücksichtigung eines minimalen Sicherheitsabstandes, der beim Stand der Technik weitaus größer ausfallen muß, beispielsweise bei der im Stand der Technik bekannten Verchromungsanlage in der ein völlig unkontrollierter Eindrehvorgang abläuft. Durch die Abstimmung der Geschwindigkeit der translatorischen Bewegung und der Eindreh- bzw. Ausdrehgeschwindigkeit des Werkstücks kann die Bewegungskurve des Werkstücks genau vorbestimmt und optimal an die Form des Behandlungsbereiches angepaßt werden. Dementsprechend kann auch die Gesamtlänge minimiert werden.

Indem die Drehgeschwindigkeit im wesentlichen konstant gehalten wird, kann eine stetige Bewegungskurve erzielt werden, was bei schwereren Werkstücken zur Erlangung eines gleichmäßigen Ein- und Ausdrehvorgangs besonders wichtig ist, da ansonsten bei Winkelgeschwindigkeitsänderungen größere Kräfte wirken, die einen genauen Bewegungsablauf nicht zulassen. Beispielsweise, wenn die auf einem Halterungsgestell befindlichen schweren Fahrzeugkarosserien beim Ein- bzw. Ausdrehen aufgrund der Trägheit bei einer Änderung der Winkelgeschwindigkeit sich kurzfristig weiterbewegen als gewünscht.
Die erfindungsgemäße Vorrichtung kann für verschiedenste Oberflächenbehandlungsverfahren eingesetzt werden. So ist das Ein- und Ausbringen von Werkstücken in ein flüssiges Medium zur Ausführung einer Tauchlackierung optimal geeignet. Die erfindungsgemäße Verfahrensweise ist aber auch für die Pulverlack- oder Naßlackierung sehr gut geeignet. Bei den hierfür vorgesehenen Behandlungskabinen stellt sich, wie bei den zum Tauchlackieren notwendigen Behandlungsbecken das Problem, in einem Ein- bzw. Ausgangsbereich der Kabinen die Werkstücke ein- bzw. ausführen. So können diese Kabinen über oder unter dem Zuführniveau der Werkstücke liegen.

Schließlich eignet sich die erfindungsgemäße Koppelung einer kontinuierlichen translatorischen Bewegung und einer gesteuert und jederzeit geführten Drehbewegung der Werkstücke auch dazu, daß sich in einem Trockner bei bereits lackierten Werkstücken keine Tropfnasen bilden. Hierzu ist bei der erfindungsgemäßen Vorrichtung zur Oberflächenbehandlung anstatt einem Abstand zwischen der Drehachse und dem Werkstück optimalerweise das Werkstück nahe der Drehachse oder sogar im Bereich der Drehachse anzuordnen.

Eine mechanisch sehr einfach aufgebaute und wartungsarme Ausführung ist dadurch gegeben, daß das Halterungsgestell mindestens einen seitlich befestigten Hebel aufweist, der mit einer Führung zusammenwirkt, um die Drehung des Halterungsgestells zu bewirken. Durch Anpassung der Länge des Hebels können auch schwere Werkstücke auf einem Halterungsgestell sehr leicht kontrolliert gedreht werden.

Indem auf gegenüberliegenden Seiten eines Halterungsgestells mindestens ein Hebel angebracht ist, wobei die gegenüberliegenden Hebel um einen vorbestimmten Winkelbetrag gegeneinander verdreht sind, ist es erstmals gewährleistet, daß bei entsprechender Ausführung der Führungseinrichtungen das Halterungsgestells sowohl in Vorwärtsrichtung wie auch in Rückwärtsrichtung bezüglich der Drehrichtung jederzeit abgestützt ist und dementsprechend auch genau geführt ist.

Dieser Effekt läßt sich noch verbessern, wenn auf jeder Seite des Halterungsgestells zwei Hebel angeordnet sind, wobei die Hebel auf jeweils einer Seite des Halterungsgestells symmetrisch zur Drehachse angeordnet sind und Hebelanordnungen auf den einander gegenüberliegenden Seiten um 90° verdreht sind.

Eine sehr einfache Ausführung der Betätigungseinrichtung ist dadurch gegeben, daß diese als Leitschiene ausgebildet ist.

Dadurch, daß Leitflächen an den Leitschienen im Ein- bzw. Ausgangsbereich eines Behandlungsbades, d.h. im Randbereich vorgesehen werden, kann durch einfaches Auf- bzw. Abgleiten bzw. Abrollen entsprechender Einrichtungen am Halterungsgestell die Drehung bewirkt werden.

Die Verdrehung wird optimalerweise durch auf- und abwärts geneigte Leitabschnitte gesteuert. Durch einfache gerade Ausführungen der einzelnen Leitabschnitte sind diese kostengünstig und einfach herzustellen.

Optimalerweise sind die einzelnen Leitabschnitte um etwa 45° abwärts geneigt, andere Leitabschnitte um etwa 45° aufwärts geneigt.

Eine reibungsarme und problemlos zu wartende Ausführung besteht darin, daß an den Enden der Hebel Rollen angeordnet sind, die mit den Leitschienen zusammenwirken.

Kompliziertere, aber auch sehr genaue und auch bei schwersten Gegenständen verwendbare Betätigungseinrichtungen umfassen fest am Behandlungsbad angebrachte Zahnstangen oder Schraubenspindeln, die mit am Halterungsgestell entsprechend ausgebildeten Zahnrädern bzw. Schnecken zusammenwirken. Hierdurch ist es auch möglich, Zwischengetriebe, wenn notwendig, einzufügen.

Vorteilhafterweise weist das Halterungsgestell im Bereich der Drehachse Führungsmittel auf, die in den Führungsschienen geführt werden. Damit läßt sich die kontinuierliche translatorische Bewegung genauestens auf das Halterungsgestell in der durch die Führungsschienen vorgegebenen Richtung bewirken.

Insbesondere sind Rollen als Führungsmittel in den Führungsschienen vorgesehen, da somit die Reibung minimiert wird, was bei mehreren hintereinander angeordneten und miteinander verbundenen Halterungsgestellen wichtig wird.

Indem am Halterungsgestell Aufnahmen angeordnet sind, können Werkstücke unmittelbar lösbar darauf befestigt werden oder auch mittelbar, beispielsweise bei Fahrzeugkarosserien, die auf einem Skid lösbar befestigt sind.

Indem die Aufnahmen eine Lageposition einnehmen, die gegenüber einer Vertikalrichtung bei der translatorischen Bewegung des Halterungsgestells in Bewegungsrichtung unverändert bleibt, ist das Aufbringen einer Fahrzeugkarosserie mit einem Skid durch nebenangeordnete, auf gleicher Höhe liegende Fördermittel einfachst möglich.

Für die kontinuierliche Bewegung der einzelnen Werkstücke sind alle aus dem Stand der Technik bekannten Antriebsmittel verwendbar. Insbesondere eignen sich hervorragend Kettenantriebe, Zugseilanordnungen, Gewindestangen oder auch selbstfahrende Halterungsgestelle, die einen eigenen Antrieb aufweisen.

Die in dieser Anmeldung angegebenen Winkelangaben sind nicht als Absolutwerte anzusehen. Im Rahmen der Offenbarung fallen hierunter auch etwa um ±10% abweichende Werte.

### Kurze Beschreibung der Erfindung

Im folgenden werden zur weiteren Erläuterung und zum besseren Verständnis der Erfindung mehrere Ausführungsbeispiele unter Bezugnahme zu den beigefügten Zeichnungen näher beschrieben und erläutert. Es zeigt:
- Fig. 1: eine schematische, perspektivische Seitenansicht einer erfindungsgemäßen Anlage bezüglich der Transportrichtung einzelner Fahrzeugkarosserien von der rechten Seite aus gesehen,
- Fig. 2: eine schematische, perspektivische Seitenansicht der erfindungsgemäßen Anlage nach Fig. 1 von in Transportrichtung der Fahrzeugkarosserien der linken Seite aus gesehen,
- Fig. 3: eine Querschnittsansicht durch eine erfindungsgemäße Anlage nach der Fig. 1 oder 2,
- Fig. 4: eine schematische, direkte Seitenansicht der erfindungsgemäßen Anlage nach den Fig. 1 bis 3,
- Fig. 5: eine Seitenansicht der erfindungsgemäßen Anlage, in der der Ein- und Austauchvorgang in bzw. aus einem Behandlungsbad schematisch dargestellt ist,
- Fig. 6: eine Seitenansicht einer weiteren Ausführungsform der erfindungsgemäßen Anlage mit einer zusätzlichen Steuerführung zum Schwenken der Fahrzeugkarosserien,
- Fig. 7: eine Seitenansicht einer in das Behandlungsbad eingetauchten Fahrzeugkarosserie in einer erfindungsgemäßen Anlage gemäß einer weiteren Ausführungsform mit besonderen Steuerführungsschienen zum Schwenken der Fahrzeugkarosserien,
- Fig. 8 bis 10: eine Darstellung der Abfolge des horizontalen Aufbringens einer Fahrzeugkarosserie auf einem Skid auf eine erfindungsgemäße Anlage,
- Fig. 11 - 13: eine Ablaufdarstellung des vertikalen Aufbringens einer auf einem Skid gelagerten Fahrzeugkarosserie auf eine erfindungsgemäße Anlage,
- Fig. 14 - 16: eine schematische Ablaufdarstellung des Aufbringens einer Fahrzeugkarosserie ohne Zwischenschaltung eines Skids auf einer dafür vorgesehenen Vorrichtung gemäß der erfindungsgemäßen Anlage,
- Fig 17: eine schematische Seitenansicht auf einen Trockner, bei dem ein Höhenunterschied zwischen einem Grund- und Trocknerniveau durch eine Drehung der Fahrzeugkarosserien überwunden wird, und
- Fig. 18: eine schematische Seitenansicht auf einen Lacktrockner, bei dem während einer kontinuierlichen translatorischen Bewegung von Fahrzeugkarosserien eine Drehung der Fahrzeugkarosserien bewirkt wird.

### Wege zur Ausführung der Erfindung

### 1. Ausführungsform

### Aufbau:

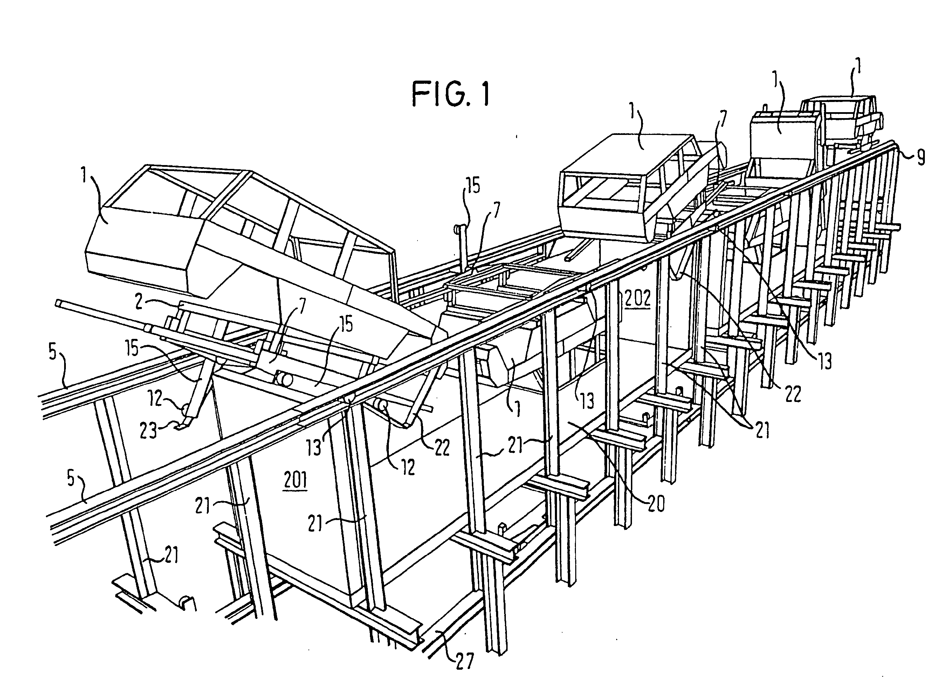

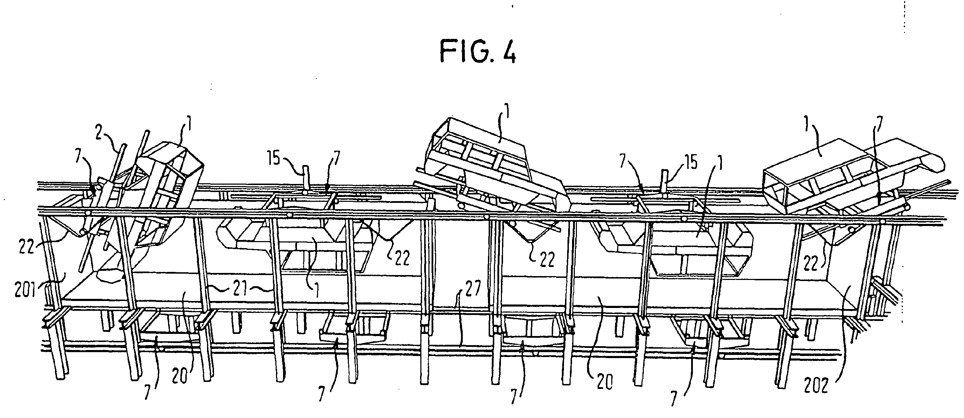

Eine erste Ausführungsform der erfindungsgemäßen Anlage ist in den Fig. 1 bis 5 gezeigt. Über mehreren hintereinandergeschalteten Behandlungsbädern 20 verlaufen an deren Seiten Führungsschienen 5. Die Führungsschienen 5 sind voneinander beabstandet und zueinander parallel über den Behandlungsbädern 20 angeordnet. Sie weisen im Querschnitt gesehen jeweils zwei übereinanderliegende Führungsseitenflächen auf. Am Ende einer derartigen Aneinanderreihung von Behandlungsbädern 20 verlaufen die Führungsschienen 5 abwärts und enden in unterhalb der Behandlungsbäder 20 angeordneten Rückführschienen 27. In den Umkehrpunkten zwischen oberen Führungsschienen und den unteren Rückführungsschienen 27 sind Umlenkungen 9 angeordnet.

In den Führungsschienen 5 verlaufen hier nicht dargestellte Antriebsmittel wie beispielsweise angetriebene Ketten, Zugseile, Getriebestangen oder dergleichen. Diese Antriebsmittel werden über die Umlenkungen 9 oder anderen diesen zugeordneten Mitteln zu den Rückführschienen 27 umgelenkt und verlaufen in den Rückführschienen 27 zurück. Ein hier nicht dargestellter Motor treibt diese Antriebsmittel kontinuierlich mit einer einzustellenden Geschwindigkeit an.

Einzelne Fahrzeugkarosserien 1 sind jeweils mit einem Skid 2 fest verbunden. Jeweils ein Skid 2 mit darauf angebrachter Fahrzeugkarosserie 1 ist lösbar mit einem Halterungsgestell 7 verbunden. Mehrere dieser Halterungsgestelle 7 sind beabstandet voneinander mit dem hier nicht dargestellten Antriebsmittel verbunden, das sich zwischen den Führungsschienen 5 und Rückführschienen 27 erstreckt.

Jedes Halterungsgestell weist eine Drehachse 13 auf, die zwischen den Schienen 5 quer zur durch die Schienen 5 vorgegebenen Richtung verläuft; d.h. quer zur durch die Antriebsmittel vorgegebenen Bewegungsrichtung längs der Behandlungsbäder 20. Die Drehachse eines Halterungsgestells 7 wird in den Führungsschienen 5 bzw. auch in den Rückführschienen 27 mittels beispielsweise Rollen geführt. An jeder Seite des Halterungsgestells 7 sind mit der Drehachse 13 jeweils zwei einander gegenüberliegende Hebel 15 angeordnet. Zwei auf einer Seite des Halterungsgestells 7 angeordnete Hebel sind um etwa 180° zueinander versetzt angeordnet. Auf der gegenüberliegenden Seite des Halterungsgestells 7 sind diese Hebel gegenüber der anderen Seite um 90° verdreht. An jeweils den Enden der Hebel 15 sind Rollen 12 drehbar angeordnet.

Im Bereich einer Seitenwand 201 des Behandlungsbads 20 sind auf jeder Seite im Bereich der oberen Führungsschienen 5 Leitschienen 22, die eine spezielle Form aufweisen, befestigt. Auf der einen Seite, in der Fig. 1 die rechte Seite, ist eine Leitschiene 22 im Bereich der Seitenwand 201 des Behandlungsbads 20 angebracht, die einen ersten waagrechten Abschnitt, dann einen in ungefähr 45° abgewinkelten, nach unten zeigenden Abschnitt aufweist, und dann in einen ungefähr 45° gegenüber einer Horizontalen aufwärts gerichteten Abschnitt übergeht. Danach verläuft diese Leitschiene 22 bis fast zur anderen Stirnwand 202 des Bads 20 waagrecht.

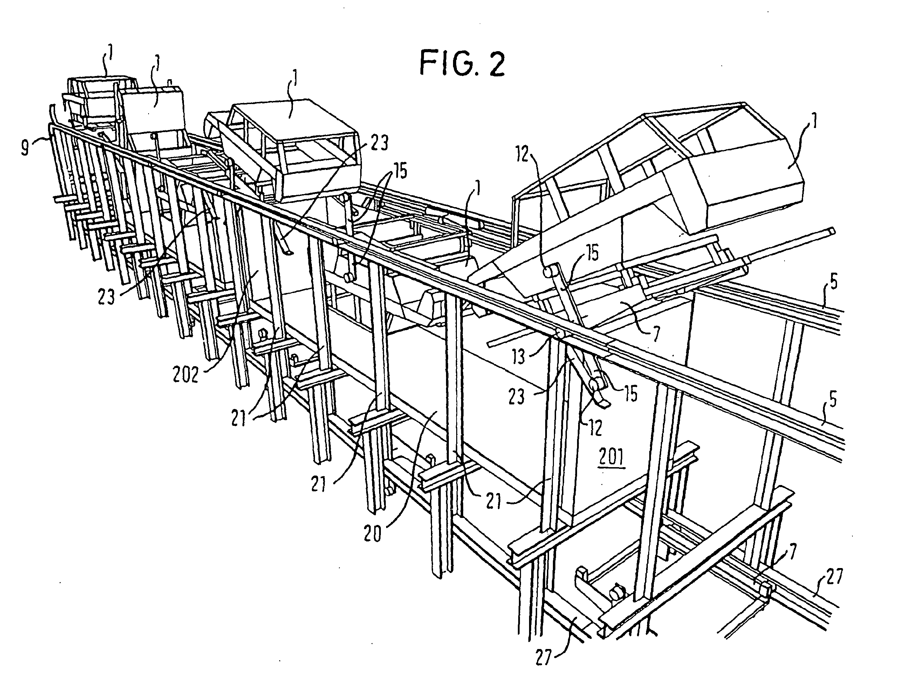

Wie aus der von der linken Seite her gesehenen Darstellung in Fig. 2 ersichtlich ist, ist auf der anderen Seite, also hier der linken Seite, die der vorgenannten Leitschiene 22 in Fig. 1 gegenüberliegende Leitschiene 23 in Bewegungsrichtung der Fahrzeugkarosserien gesehen zuerst mit einem unterhalb einer Führungsschiene 5 angeordnetem waagrechten Abschnitt versehen. Dieser waagrechte Abschnitt mündet in einen in etwa 45° nach oben zeigenden Abschnitt. Daran schließt sich ein etwa 45° nach unten zeigender Abschnitt an.

Am Ende eines Behandlungsbades 20 im Bereich einer Seitenwand 202, wie in den Fig. 1 und 2 dargestellt, sind wiederum beiderseits des Behandlungsbads 20 Leitschienen 22, 23 in der zuvor beschriebenen Art und Weise ausgebildet.

Im Bereich zwischen zwei Seitenwänden 201, 202 eines Behandlungsbads 20 ist aber zumindest eine Leitschine 22, 23 horizontal verlaufend ausgebildet.

Zusammenfassend ist nochmals hervorzuheben, daß im Eingangs- bzw. Ausgangsbereich eines Behandlungsbads 20 jeweils Leitschienen 22, 23 gegenüberliegend in umgedrehter Anordnung bezüglich zweier gegenüberliegender Seiten plaziert sind; d.h. wenn auf der einen Seite ein aufwärtsgerichteter Leischienenabschnitt vorhanden ist, ist der auf der gegenüberliegenden Seite des Halzterungsgestells 7 angeordnete Leitschienenabschnitt abwärtsgerichtet.

### Arbeitsweise:

Auf die Leitschienen 22, 23 rollen die an den Enden jeweils eines Hebels 15 der Halterungsgestelle 7 angeordneten Rollen 12 ab. Durch die kontinuierliche Beförderung der Halterungsgestelle 7 in den Führungsschienen 5 wird eine auf dem Halterungsgestell 7 lösbar befestigte Fahrzeugkarosserie mit dazwischengeschaltetem Skid 2 folgendermaßen gedreht.

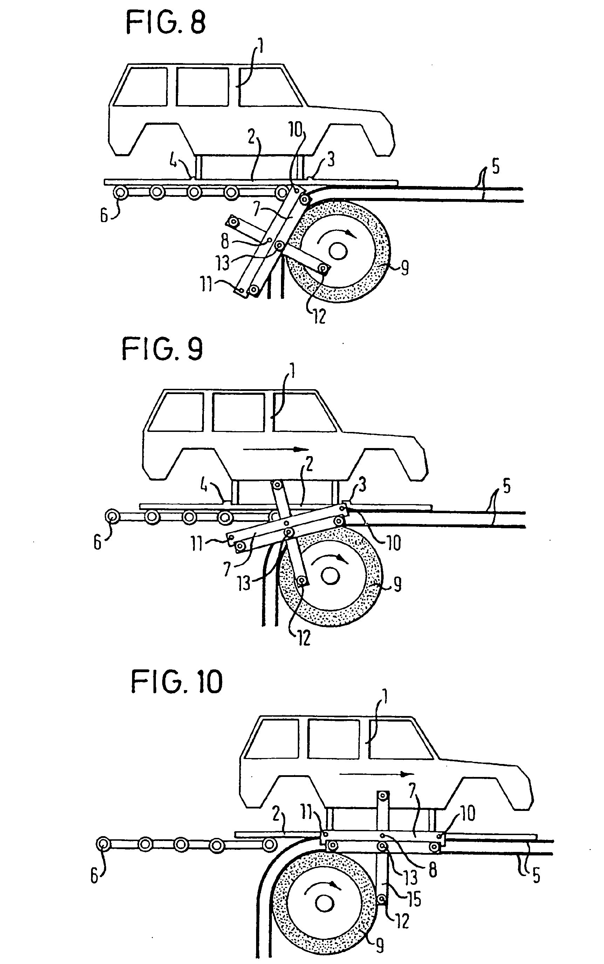

Eine auf einem Skid 2 befestigte Fahrzeugkarosserie 1 ist bereits auf einem Halterungsgestell 7 lösbar befestigt. Dieser Vorgang wird im einzelnen unter Bezugnahme zu den Fig. 8 bis 16 im späteren noch näher erläutert. Durch das Antriebsmittel wird das Halterungsgestell 7 mit nunmehr darauf befindlicher Fahrzeugkarosserie 1 in waagrechter Ausrichtung längs der Führungsschienen 5 in den Eingangsbereich eines Behandlungsbads 20 geführt. Dabei steht ein Paar Hebel 15 auf der einen Seite des Halterungsgestells 7 senkrecht, das gegenüberliegende Paar Hebel 15 dagegen ist waagrecht ausgerichtet. Das Hebelpaar 15, das waagrecht ausgerichtet ist, rollt auf dem waagrechten Leitschienestück 22 . Dadurch wird das Halterungsgestell waagrecht ausgerichtet gehalten bewegt. Der nach unten stehende Hebel 15 des senkrecht stehenden Paars Hebel 15 rollt durch die kontinuierliche Bewegung des Antriebsmittels auf den kurzen waagrechten ersten Abschnitt der linken Führungsschiene 23 auf deren Oberseite auf. Der gegenüberliegende erste Hebel, der bisher auf einem waagrechten Führungsstück der rechten Leitschiene 22 abrollte, befindet sich nun genau auf dem Knickpunkt der rechten Leitschiene 22, an dem die rechte Leitschiene 22 nach unten hin abknickt.

Durch die fortgesetzte translatorische Bewegung läuft nunmehr die Rolle 12 des Hebels 15 auf der linken Seite des Halterungsgestells 7 auf dem mit 45° nach oben hin gerichteten Abschnitt der linken Leitschiene ab. Dadurch wird das Halterungsgestell 7 in Richtung der translatorischen Bewegung vorwärts gedreht. Gleichzeitig rollt die Rolle 12 des sich auf der rechten Seite befindlichen Hebels 15 auf dem nach unten gerichteten Abschnitt der rechten Leitschiene 22 ab. Das gleichzeitige Abrollen auf der rechten 22 wie auch auf der linken Leitschiene 23 bewirkt, daß der Drehvorgang gesteuert und jederzeit kontrolliert verläuft. Das Halterungsgestell 7 stützt sich ja sowohl in Vorwärts- wie auch in Rückwärtsrichtung bezüglich der kontinuierlichen bewegung auf den Hebeln 15 ab.

Der weitere Drehvorgang wird durch die weiteren an- bzw. absteigenden Abschnitte der rechten 22 bzw. linken Leitschienen 23 gesteuert. Schließlich ist die Karosserie 1 vollständig in dem Behandlungsbad 20 eingetaucht und wird weiterhin kontinuierlich in dem Behandlungsbad 20 längs der Führungsschienen 5 befördert.

Am Ende des Behandlungsbades 20 rollt die sich auf der linken Seite an einem Hebel 15 befindliche Rolle 12 auf die linke Leitschiene 23 auf. Dadurch wird ein Ausdrehvorgang aus dem Behandlungsbad 20 der Fahrzeugkarosserie 1 bewirkt. Wiederum rollt auf der rechten Seite gleichzeitig eine Rolle 12 eines Hebels 15 auf einem entsprechend entgegengesetzt ausgerichteten Abschnitt der rechten Leitschiene 22 ab. Dadurch wird ein vollständiger und kontrollierter Ausdrehvorgang der Fahrzeugkarosserie 1 bewirkt.

Die rechten 22 und linken Leitschienen 23 im Bereich der Seitenwände 201, 202 eines Behandlungsbads 20 und die gleichzeitige kontinuierliche Beförderung eines Halterungsgestells 7 in den Schienen 5 ermöglichen, daß die Seitenwände des Behandlungsbads 20 senkrecht stehend bzw. sehr steil abwärts bzw. sehr steil aufwärtsgeneigt anordbar sind.

Die seitlichen Leitschienen 22, 23 sollten eine Steigung von 45° besitzen. In diesem Fall können gerade Leitschienen 22, 23 eingesetzt werden, ohne daß es zu größeren Schwankungen der Winkelgeschwindigkeit bei der Rotation kommt.

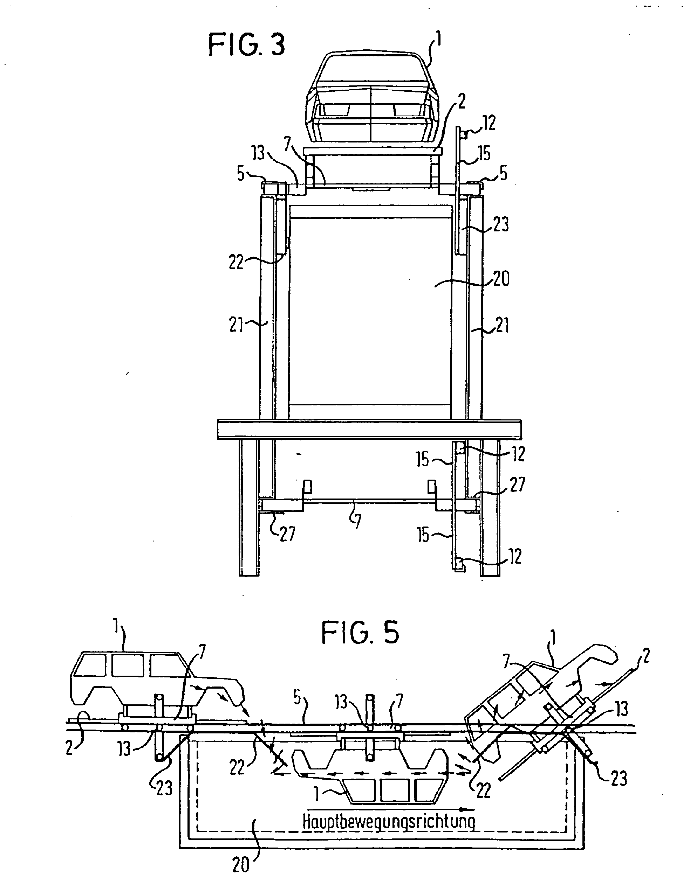

Aus der in der Fig. 3 dargestellten Querschnittsansicht ist der grundsätzliche Aufbau einer erfindungsgemäßen Anlage gut erkennbar. Neben dem Behandlungsbad 20 befinden sich Träger 21, auf denen die Führungsschienen 5 verlaufen. In diesen Führungsschienen 5 werden, wie bereits ausführlich erläutert, die Halterungsgestelle 7 mit den darauf befindlichen über ein Skid 2 befestigten Fahrzeugkarosserien 1 befördert. Die Halterungsgestelle 7 weisen eine Drehachse 13 auf, an denen Hebel 15 mit daran befindlichen Rollen 12 versehen sind. Die Rollen 12 rollen auf Leitschienen 22 bzw. 23 ab.

Unterhalb des Behandlungsbades werden, wie insbesondere aus der Fig. 3 ersichtlich, die Halterungsgestelle in Rückführschienen 27 in ihre ursprüngliche Position zurückgeführt.

### 2. Ausführungsform:

### Aufbau:

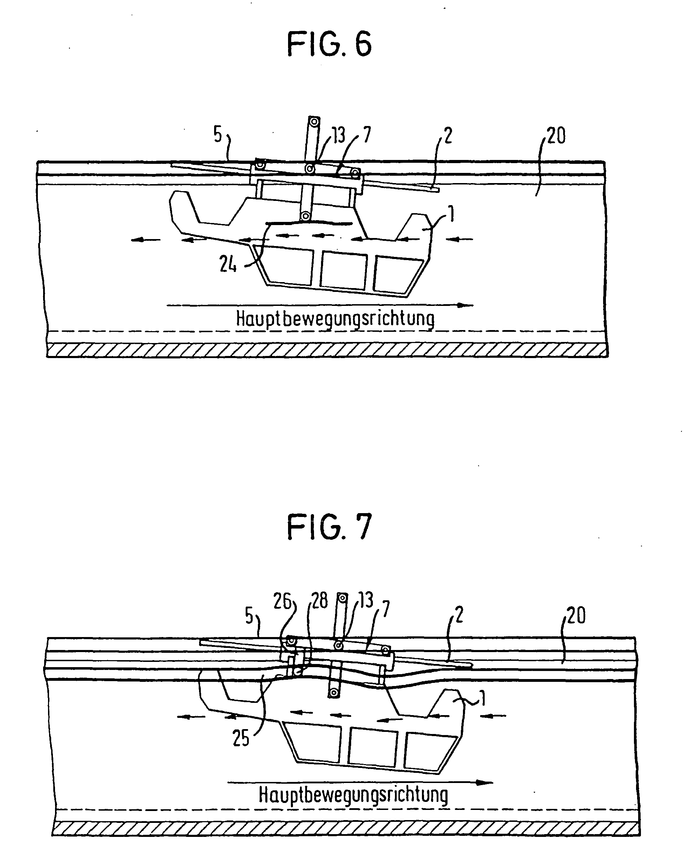

Eine weitere Ausführungsform der erfindungsgemäßen Anlage ist aus der Fig. 6 ersichtlich. Bei der in der Fig. 6 gezeigten Ausführungsform der erfindungsgemäßen Vorrichtung ist eine zusätzliche Steuerführungsschiene 24 im Bereich des Behandlungsbades 20 angeordnet. Gegenüber der zuvor beschriebenen ersten Ausführungsform der Erfindung, bei der in demjenigen Bereich des Behandlungsbads 20, in welchem die Fahrzeugkarossierie 1 vollständig umgedreht und eingetaucht im Medium des Behandlungsbades 20 hindurchtransportiert wird und die Hebel 15 auf einer der Leitschienen 22, 23 waagrecht geführt wurden, so daß keine Verdrehung der Fahrzeugkarosserie 1 in diesen Bereich des Behandlungsbads 20 möglich war, ist nun die Leitschiene 22 oder 23 in diesem Bereich um eine zusätzliche Führungsschiene 24 ergänzt. Die Leitschiene 22 oder 23 und die Führungsschiene 24 weisen einen in der Seitenansicht mehrfach gekrümmtne Verlauf auf.

### Arbeitsweise:

Auf dieser Führungsschiene 24 rollt einer der Hebelarme mit der Rolle 12 ab, so daß durch den gekrümmten Verlauf der Steuerführungsschiene 24 das gesamte Halterungsgestell mit darauf befindlicher Fahrzeugkarossierie 1 bezüglich der Drehachse 13 des Halterungsgestells 7 leicht hin- und herverschwenkt wird. Dadurch wird die Möglichkeit geschaffen, die Fahrzeugkarossierie im Behandlungsbad zu schaukeln, was zur weiteren Reduzierung von eingeschlossenen und durch den Prozeß hervorgerufenen Luftblasen führt.

### 3. Ausführungsform

### Aufbau:

Bei der in der Fig. 7 dargestellten dritten Ausführungsform der Erfindung ist das Halterungsgestell 7 gegenüber den zuvor beschriebenen Ausführungsformen zusätzlich mit einem kleinen seitlich abstehenden Steuerungshebel 26 ausgebildet, an dessen Ende eine Rolle 28 drehbar befestigt ist. Die Rolle 28 verläuft in einer Steuerführungsschiene 25, die sich längs eines Behandlungsbades 20 erstreckt. Die Steuerungsführungsschiene 25 weist verschieden gekrümmte Abschnitte auf, so daß auf- und absteigende Steuerungsabschnitte in der Führungsschiene vorhanden sind.

### Arbeitsweise:

Beim kontinuierlichen Transport des Halterungsgestells 7 in den Führungsschienen 5 rollt die Steuerungsrolle 28 am Steuerungshebel 26 des Halterungsgetells 7 in der Steuerführungsschiene 25 ab. Bei den auf- bzw. abwärts geneigten Abschnitten der Steuerungsführungsschiene wird das Halterungsgestell 7 um die Drehachse 13 des Halterungsgestells 7 leicht hin- und herverschwenkt. Wiederum wird hierdurch das Hin- und Herverschwenken der Fahrzeugkarosserie 1 bewirkt, was die Reduzierung von möglicherweise in der Karosserie 1 eingschlossenen Luftblasen ermöglicht.

### 4. Ausführungsform

### Aufbau:

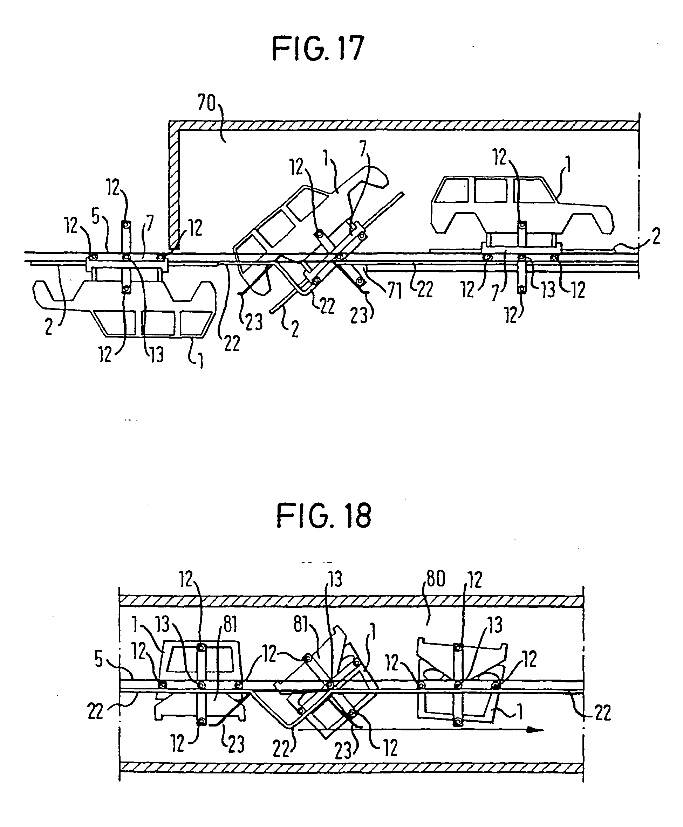

In der Fig. 17 ist ein Trockner 70 gezeigt, bei dem auf Halterungsgestellen 7 befestigte Fahrzeugkarossierien 1 an den bereits erläuterten Führungsschienen 2 auf einem unteren Niveau zugeführt werden. Dabei hängen die Fahrzeugkarosserien 1 an den Halterungsgestellen 7 auf dem Kopf abwärtsgerichtet. Im Eingangsbereich des Trockners 70 sind wiederum rechts und links der Führungsschienen 2 Leitschienen 22, 23 angeordnet. Diese Leitschienen 22, 23 entsprechen den bereits bei den ersten bis dritten Ausführungsformen erläuterten Leitschienen 22, 23.

Im Eingangsbereich des Trockners 70 befindet sich in dessen Boden in Höhe der Führungsschine 2 eine Eingangsöffnung 71. Durch diese Eingangsöffnung 71 werden die Fahrzeugkarosserien 1 durch Drehung um etwa 180° um die Drehachse 13 des jeweiligen Halterungsgestells 7 in den Trockner 70 eingebracht.

### Arbeitsweise:

Die Fahrzeugkarosserien 1 werden translatorisch kontinuierlich längs der Führungsschienen 2 bewegt. Dabei rollen an den jetzt waagrecht liegenden Hebeln des Halterungsgestells 7 angeordnete Rollen 12 auf der sich horizontal erstreckenden Leitschiene 22 ab. So wird das Halterungsgestell 7 in der waagrechten Position mit den über Kopf hängenden Fahrzeugkarosserien 1 befördert. Sobald die Leitschiene 23 erreicht wird, läuft hieran die Rolle 12 eines senkrecht stehenden Hebels auf und das Halterungsgestell 7 wird mitsamt der darauf befindlichen Fahrzeugkarosserie 1 bei der in Fig. 17 dargestellten Seitenansicht im Uhrzeigersinn durch die Eingangsöffnung 71 hindurch in den Trockner 70 eingedreht. Sodann wird im Trockner 70 das Halterungsgestell kontinuierlich längs der Führungsschienen 2 fortbewegt, wobei die nunmehr an den waagrecht ausgerichteten Hebeln befindlichen Rollen 12 an der waagrecht ausgebildeten Leitschiene 22 abrollen.

Im Ausgangsbereich, der hier in der Fig. 17 nicht dargestellt ist, sind wiederum Leitschienen 22, 23 angeordnet, sowie eine Ausgangsöffnung durch die durch nochmalige Drehung in Uhrzeigerrichtung die Fahrzeugkarosserien 1 aus dem Trockner 70 herausgedreht werden.

### 5. Ausführungsform

### Aufbau:

Bei der in Fig. 18 dargestellten Seitenansicht eines Trockners kommen die auch bei den anderen Ausführungsformen, die zuvor beschrieben wurden, verwendeten Leitschienen 22, 23 zur Drehung von Fahrzeugkarosserien 1 in Anwendung. Die Fahrzeugkarosserien 1 sind auf Halterungsgestellen 81 lösbar befestigt. Die Halterungsgestelle weisen wiederum eine Anzahl Hebel auf, an deren Enden Rollen 12 angebracht sind. Die Halterungsgestelle 81 sind in Führungsschienen 5, die sich im Trocknerraum 80 erstrecken, geführt.

Im Gegensatz zu den zuvor beschriebenen Halterungsgestellen sind die hier verwendeten Halterungsgestelle 81 derart aufgebaut, daß die Drehachse 13 der Halterungsgestelle 81 im Mittelbereich einer Fahrzeugkarosserie zum Liegen kommt. Hierfür sind die Halterungsgestelle mit einer vertieften, eine Art Bodenwanne bildende Aufnahmeeinheit ausgestattet. Des weiteren sind die Fahrzeugkarosserien anstatt quer zur Drehachse 13 längs der Drehachse 13 ausgerichtet.

### Arbeitsweise:

Eine Fahrzeugkarosserie 1 auf einem Halterungsgestell 81 wird waagrecht ausgerichtet kontinuierlich in den Führungsschienen 5 bewegt. Dabei rollen die Rollen 12 der waagrecht liegenden Hebel auf einem horizontal ausgerichteten Stück der Leitschiene 22 ab. Sobald eine Rolle 12 eines senkrecht stehenden Hebels auf die Leitschiene 23, bzw. daran ansteigenden Teil aufrollt, wird das Halterungsgestell hier in Uhrzeigerrichtung gedreht. Dabei rollen die bisher auf dem waagrechten Stück der Leitschiene 22 abrollenden Rollen 12 nunmehr auf einem nach unten ausgerichteten Stück der Leitschiene 22 ab. Durch Gestaltung der Leitschienen 22, 23 werden die Fahrzeugkarosserien 1 kontinuierlich um die Drehachse 13 des Halterungsgestells 81 ständig gedreht. Das hat zur Folge, daß sich an den frisch lackierten Fahrzeugkarosserien 1 keine Tropfnasen, die zu einer Qualitätseinbuße führen würden, bilden können.

### Aufbringen einer Fahrzeugkarosserie:

Im folgenden werden verschiedene Ausführungsformen zum Aufbringen einer Fahrzeugkarosserie auf eine erfindungsgemäße Vorrichtung anhand der Fig. 8 bis 16 eingehend erläutert. Jede der nachfolgend erläuterten Aufbringmöglichkeiten kann mit einer erfindungsgemäßen Vorrichtung, wie sie zuvor eingehend erläutert wurden, verwendet werden.

Eine horizontale Aufbringmöglichkeit einer auf einem Skid 2 festen Fahrzeugkarosserie 1 ist in den Fig. 8 bis 10 dargestellt. Im Zuführbereich der Führungsvorrichtungen 5, d.h. in dem Bereich, in dem eine erste Umlenkung 9 für die Führungseinrichtung 5 bzw. für das darin verlaufende Antriebsmittel, vorhanden ist, erstreckt sich ein horizontales Fördermittel 6, hier eine Rollenbahn. Der Skid 2 ist mit vorderen und hinteren Aufnahmemitteln 3, 4 ausgestattet, die zu am Halterungsgestell 7 befindlichen Einhakeinrichtungen 10, 11 komplementär ausgestaltet sind.

### Erläuterung des Aufbringvorgangs auf das Halterungsgestell:

Durch die kontinuierliche Bewegung des Halterungsgestells 7 um die Umlenkung 9 wird das Halterungsgestell 7 mit der ersten Einhakeinrichtung 10 nach oben gerichtet, zu dem zugeführten Skid 2 zugeführt. Wie in der Fig. 9 gezeigt ist, gelangt die Einhakeinrichtung 10 in das vordere Aufnahmemittel 3 des Skids 2. Nunmehr wird also durch die kontinuierliche Bewegung des Halterungsgestells 7 der Skid 2 mit der darauf befindlichen Fahrzeugkarosserie 1 durch die bereits eingehakte vordere Aufnahme 3 des Skids 2 mitgezogen. Daraufhin gelangt, wie aus der Fig. 10 ersichtlich, das hintere Aufnahmemittel 4 des Skids 2 mit der hinteren Einhakeinrichtung 11 des Halterungsgestells 7 in Eingriff. Somit ist nun der Skid 2 fest am Halterungsgestell 7 eingehakt und wird von dem Fördermittel 6 vollständig heruntergezogen. Anschließend wird der Skid auf dem Halterungsgestell mit dem Verriegelungsmechanismus 8 fixiert.

Zur Abnahme des Skids mit nunmehr behandelter Fahrzeugkarosserie 1 von dem Halterungsgestell 7 im Ausführbereich der Vorrichtung, das heißt am Ende der Behandlungsbäder 20, verläuft umgekehrt zu dem beschriebenen Aufbringvorgang.

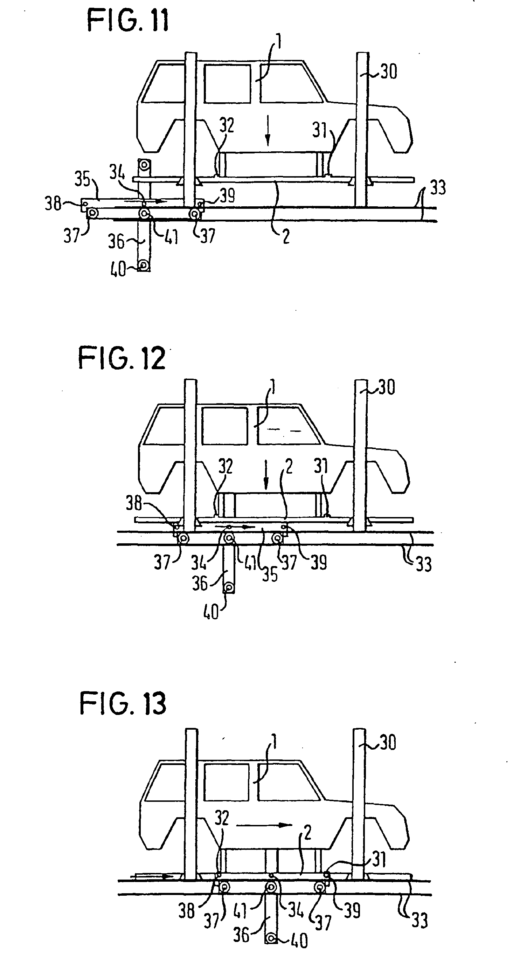

Eine vertikale Zuführ- bzw. Abnahmeeinrichtung auf ein Halterungsgestell 7 gemäß der erfindungsgemäßen Vorrichtung ist in den Fig. 11 bis 13 gezeigt.

Über Führungsschienen 33, in der ein Halterungsgestell 35, ähnlich aufgebaut wie zuvor beschrieben, geführt wird, ist eine Liftanordnung 30 für Skids 2 mit darauf befindlicher Fahrzeukarossierie 1 angeordnet. Mit dieser Liftanordnung 30 ist ein Skid 2 vertikal absenk- bzw. anhebbar. Das Halterungsgestell 35 besitzt jeweils Hebel 36, an denen Rollen 40 angeordnet sind. Vordere und hintere Einhakeinrichtungen 38, 39 sind am Halterungsgestell fest angeordnet.Die Einhakeinrichtungen 38, 39, greifen in entsprechend ausgebildete vordere und hintere Aufnahmeeinrichtungen 31, 32 am Skid 2 ein. Eine Verriegelung 34 befindet sich im Bereich der Drehachse 41 des Halterungsgestells.

### Arbeitsweise dieser Liftanordnung

Das Halterungsgestell 35 wird in den Führungsschienen 33 waagrecht ausgerichtet und kontinuierlich längs der Führungsschienen 33 bewegt. Sobald ein Halterungsgestell 35 sich unter dem Skid 2 auf der Liftanordnung 30 befindet, wird die Liftanordnung 30 abgesenkt, so daß die vordere Einhakeinrichtung 39 des Halterungsgestells 35 in die entsprechend ausgebildete vordere Aufnahme 31 des Skids 2 einlaufen kann. Dadurch, daß die Liftanordnung 30 soweit abgesenkt wurde, daß der Skid 2 auf dem Halterungsgestell 35 leicht aufliegt, wird beim Einrasten der vorderen Einhakeinrichtung 37 auch die hintere Einhakeinrichtung 38 in die entsprechende hintere Aufnahmeeinrichtung 32 des Skids 2 eingerastet und anschließend über die Verriegelung 34 lösbar befestigt. Nunmehr wird der Aufzug 30 nach oben verfahren, um eine neue Fahrzeugkarosserie mit Skid 2 auf ein dahinter befindliches Halterungsgestell 35 aufzubringen.

Beim Entladen wird die nunmehr behandelte Fahrzeugkarosserie vom Halterungsgestell 35 entriegelt und durch eine wie zuvor ausgebildete Aufzugseinrichtung nach oben entfernt.

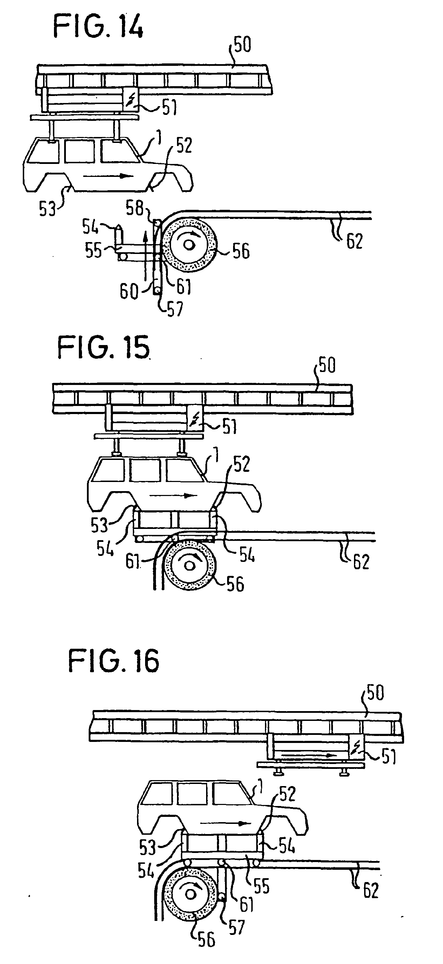

Aus den Fig. 14 bis 16 ist eine horizontale Zuführmöglichkeit einer Fahrzeugkarosserie ohne Skid auf ein Halterungsgestell in einer erfindungsgemäßen Anlage gezeigt.

### Aufbau:

Ein Fördermittel 50 mit einzeln daran bewegbaren Trägern 51 ist oberhalb von Führungsschienen 62 angeordnet. In den Führungsschienen 62 geführte Halterungsgestelle 55 weisen vordere und hintere Einhakmittel 54 auf, die in entsprechend ausgebildete vordere und hintere Aufnahmen 52, 53 an einer Fahrzeugkarosserie 1 einbringbar und verriegelbar sind. Ein derartiges Halterungsgestell 55 weist wiederum Hebelarme 60 auf, die mit Rollen 57, 58 versehen sind, um zur Drehung um eine Drehachse 61 während des Eintauchens in ein Behandlungsbad 20 als Führung zu dienen.

### Arbeitsweise:

Eine skidlose Fahrzeugkarosserie 1 wird mittels des Fördermittels 51 an einen Zuführbereich der erfindungsgemäßen Anlage zugeführt. Dort wird ein Halterungsgestell 55 von unten an die Karosserie 1 mittels der Antriebsmittel in den Führungsschienen 62 herangebracht, so daß seine Einrasteinrichtungen 54 in die Aufnahmen 52, 53 der Fahrzeugkarosserie 1 einrasten und verriegelt werden können. Dabei gibt das Fördermittel 51 die Fahrzeugkarosserie frei und verläßt den Übernahmeplatz.

Bei der Abgabe bringt ein Halterungsgestell 55 die Fahrzeugkarosserie 1 zum Abgabeplatz. Dort wird die Fahrzeugkarosserie vom Halterungsgestell 55 entriegelt und von dem nachfolgenden Fördermittel 51 aufgenommen. Das Halterungsgestell 55 wird nach unten wegbewegt und die Fahrzeugkarosserie 1 kann vom nachfolgenden Fördermittel 51 abtransportiert werden.

## Patentansprüche

1. Vorrichtung zur Oberflächenbehandlung von Fahrzeugkarosserien in Behandlungsbädern oder Behandlungskabinen, mit
- zumindest einem Halterungsgestell (7) zur Aufnahme einer oder mehrerer Fahrzeugkarosserien (1), das
- längs einer durch die Anordnung des Behandlungsbads (20) oder der Kabine (70) vorgegebenen Bewegungsrichtung der Fahrzeugkarosserien (1) kontinuierlich bewegbar ist,
- eine Aufnahmeeinrichtung (10, 11; 38 39; 54) umfasst, mit der die Fahrzeugkarosserie (1) am Halterungsgestell (7) lösbar anbringbar ist, und
- eine quer zur Bewegungsrichtung angeordnete Drehachse (13, 41, 61) aufweist,
- einer Betätigungseinrichtung (22, 23) zum Indrehungversetzen des Halterungsgestells (7) um dessen Drehachse (13, 41, 61), wobei während des Drehvorgangs die Betätigungseinrichtung (22, 23) und das Halterungsgestell (7) ständig miteinander gekoppelt sind, so dass das Ein- bzw. Ausdrehen der Fahrzeugkarosserien in bzw. aus einem Behandlungsbereich jederzeit gesteuert und geführt ist und beim Ein- und Ausbringen der Fahrzeugkarosserie (1) in bzw. aus dem Behandlungsbereich die Drehgeschwindigkeit und die Bewegungsgeschwindigkeit so aufeinander abgestimmt werden, dass das Vorderteil der Fahrzeugkarosserie (1) nach Beendigung des Drehvorgangs unter Beachtung eines Sicherheitsabstands an einer ersten Stirnwand (201) des Behandlungsbereiches (20, 70) positioniert wird und die Fahrzeugkarosserie (1) nun mit dem jetzigen Vorderteil wiederum unter Beachtung eines Sicherheitsabstandes bis an die andere Stirnwand (202) bewegt wird, bevor diese mit einer weiteren Drehung um etwa 180° aus dem Behandlungsbereich ausgebracht wird.
- einer Führungseinrichtung (5), mit der das Halterungsgestell (7) in Bewegungsrichtung führbar ist, und
- einem Antriebsmittel, mit dem das Halterungsgestell (7) kontinuierlich in Bewegungsrichtung bewegbar ist.

2. Vorrichtung nach Anspruch 1,
**dadurch gekennzeichnet, dass**
das Halterungsgestell (7) mindestens einen seitlich befestigten Hebel (15) aufweist, der mit einer Führung (22, 23) zusammenwirkt, um die Drehung des Halterungsgestells (7) zu bewirken.

3. Vorrichtung nach Anspruch 1 oder 2,
**dadurch gekennzeichnet, dass**
jeweils an gegenüberliegenden Seiten des Halterungsgestells (7) mindestens ein Hebel (15) angebracht ist, wobei die gegenüberliegenden Hebel (15) um einen vorbestimmten Winkelbetrag gegeneinander versetzt sind.

4. Vorrichtung nach einem der Ansprüche 1 bis 3,
**dadurch gekennzeichnet, dass**
auf jeder Seite des Halterungsgestells (7) zwei Hebel (15) angeordnet sind, wobei die Hebel (15) auf jeweils einer Seite des Halterungsgestells (7) angeordnet sind und die Hebelanordnungen auf den einander gegenüberliegenden Seiten um 90° versetzt sind.

5. Vorrichtung nach Anspruch 1 und einem der Ansprüche 2 bis 4,
**dadurch gekennzeichnet, dass**
die Betätigungseinrichtung (22, 23) mit einem oder mehreren Hebeln (15) zusammenwirkt.

6. Vorrichtung nach Anspruch 5,
**dadurch gekennzeichnet, dass**
die Betätigungseinrichtung (22, 23) mindestens eine Leitschiene (22, 23) umfasst.

7. Vorrichtung nach Anspruch 6,
**dadurch gekennzeichnet, dass**
die Leitschiene (22, 23) im Ein- bzw. Ausgangsbereich eines Behandlungsbades (20) zum Indrehungversetzen des Halterungsgestells (7) geeignete Leitflächen aufweist.

8. Vorrichtung nach Anspruch 7,
**dadurch gekennzeichnet, dass**
die Leitflächen auf- und abwärts geneigte Leitabschnitte aufweisen.

9. Vorrichtung nach Anspruch 8,
**dadurch gekennzeichnet, dass**
die einzelne Leitabschnitte um etwa 45° abwärts geneigt sind, andere Leitabschnitte um etwa 45° aufwärts geneigt sind.

10. Vorrichtung nach einem der Anspruche 6 bis 9,
**dadurch gekennzeichnet, dass**
die Leitschienen (22, 23) bzw. deren Leitflächen mit am Ende der Hebel (15) angebrachten Kontaktelementen (12) in Berührung gelangen.

11. Vorrichtung nach einem der Anspruche 2 bis 10,
**dadurch gekennzeichnet, dass**
am Ende eines Hebels (15) eine Rolle (12, 40, 57, 58) zur Führung angeordnet ist.

12. Vorrichtung nach Anspruch 1,
**dadurch gekennzeichnet, dass**
jeweils einem Halterungsgestell (7) eine Betätigungseinrichtung in Form eines Motors zugeordnet ist.

13. Vorrichtung nach Anspruch 1,
**dadurch gekennzeichnet, dass**
die Betätigungseinrichtung aus einer im Ein- bzw. Ausgangsbereich eines Behandlungsbads (20) fest angebrachten Zahnstange oder Schraubenspindel besteht und mit am Halterungsgestell (7) entsprechend ausgebildeten Zahnrädern bzw. Schnecken zusammenwirkt.

14. Vorrichtung nach einem der Ansprüche 1 bis 13,
**dadurch gekennzeichnet, dass**
das Halterungsgestell (7) durch im Bereich seiner Drehachse (13, 41, 61) angeordnete Führungsmittel in der Führungseinrichtung (5) geführt ist.

15. Vorrichtung nach Anspruch 14,
**dadurch gekennzeichnet, dass**
die Führungsmittel Rollen umfassen.

16. Vorrichtung nach einem der Anspruche 1 bis 15,
**dadurch gekennzeichnet, dass**
das Halterungsgestell (7) Aufnahmen (10, 11; 38, 39; 54) aufweist, um Werkstücke mittelbar oder unmittelbar mit dem Halterungsgestell (7) lösbar zu verbinden.

17. Vorrichtung nach Anspruch 16,
**dadurch gekennzeichnet, dass**
die Aufnahmen Einhakmittel (10, 11) umfassen, die in entsprechende Aufnahmesitzflächen (3, 4; 31, 32; 52, 53) eingreifen.

18. Vorrichtung nach Anspruch 16 oder 17,
**dadurch gekennzeichnet, dass**
die Aufnahmen (10, 11; 38, 39; 54) derart am Halterungsgestell (7) angebracht sind, dass deren Lageposition gegenüber einer Vertikalrichtung veränderbar ist.

19. Vorrichtung nach Anspruch1, 16 oder 17,
**dadurch gekennzeichnet, dass**
die Aufnahmen eine Lageposition einnehmen, die gegenüber einer Vertikalrichtung bei der translatorischen Bewegung des Halterungsgestells (7) unverändert bleibt.

20. Vorrichtung nach einem der vorhergehenden Ansprüche,
**dadurch gekennzeichnet, dass**
die Führungseinrichtung (5) aus Führungsschienen (5) besteht.

## Claims

1. Device for surface treatment of vehicle bodies in treatment baths or treatment cubicles having
- at least one fixing support (7) for accommodating one or more vehicle bodies (1) which support
- is continuously movable along a direction of motion of the vehicle bodies (1) predetermined by the arrangement of the treatment bath (20) or the cubicle (70),
- comprises a receiving device (10, 11; 38, 39; 54) by means of which the vehicle body (1) is detachably attachable to the fixing support (7), and
- has an axis of rotation (13, 41, 61) arranged transverse to the direction of motion,
- an actuating device (22, 23) for setting the fixing support (7) in rotation about the axis of rotation (13, 41, 61) thereof, wherein during the rotation operation the actuating device (22, 23) and the fixing support (7) are constantly linked to one another so that the turning of the vehicle bodies into or out of a treatment domain is controlled and guided at all times and on introducing and withdrawing the vehicle body (1) into and from the treatment domain respectively the speed of rotation and the speed of motion are matched to one another in such a way that the front section of the vehicle body (1) after completion of the rotation operation is positioned with a safety clearance being taken into account against a first end wall (201) of the treatment domain (20, 70) and the vehicle body (1) is now moved with the present front section up towards the other end wall (202) with a safety clearance again being observed before with a further rotation of approximately 180° the latter is withdrawn from the treatment domain,
- a guide device (5) by means of which the fixing support (7) is guidable in the direction of motion, and
- a drive means by means of which the fixing support (7) is continuously movable in the direction of motion.

2. Device according to claim 1, **characterised in that** the fixing support (7) comprises at least one laterally mounted lever (15) which acts in conjunction with a control (22, 23) in order to bring about the rotation of the fixing support (7).

3. Device according to claim 1 or 2, **characterised in that** on opposite sides of the fixing support (7) at least one lever (15) is fitted in each case, wherein the oppositely situated levers (15) are offset relative to one another by a predetermined angle.

4. Device according to any of claims 1 to 3, **characterised in that** on each side of the fixing support (7) two levers (15) are arranged, wherein the levers (15) are each arranged on one side of the fixing support (7) and the lever placements on the sides opposite one another are offset by 90°.

5. Device according to claim 1 and any of claims 2 to 4, **characterised in that** the actuating device (22, 23) acts in conjunction with one or more levers (15).

6. Device according to claim 5, **characterised in that** the actuating device (22, 23) comprises at least one guide rail (22, 23).

7. Device according to claim 6, **characterised in that** in the inlet and outlet region of a treatment bath (20) the guide rail (22, 23) possesses suitable guide surfaces for setting the fixing support (7) in rotation.

8. Device according to claim 7, **characterised in that** the guide surfaces possess upwardly and downwardly inclined guide sections.

9. Device according to claim 8, **characterised in that** single guide sections are inclined downwardly by approximately 45°, other guide sections are inclined upwardly by approximately 45°.

10. Device according to any of claims 6 to 9, **characterised in that** the guide rails (22, 23) or the guide surfaces thereof come into contact with contact elements (12) fitted on the end of the levers (15).

11. Device according to any of claims 2 to 10, **characterised in that** at the end of a lever (15) a roller (12, 40, 57, 58) is arranged for guidance.

12. Device according to claim 1, **characterised in that** an actuating device in the form of a motor is associated with each fixing support (7).

13. Device according to claim 1, **characterised in that** the actuating device consists of a tooth rack or screw spindle fixedly attached in the inlet or outlet region of a treatment bath (20) and acts in conjunction with correspondingly constructed gear wheels or screws on the fixing support (7).

14. Device according to any of claims 1 to 13, **characterised in that** the fixing support (7) is guided in the guide device (5) by guidance means arranged in the region of its axis of rotation (13, 41, 61).

15. Device according to claim 14, **characterised in that** the guidance means comprise rollers.

16. Device according to any of claims 1 to 15, **characterised in that** the fixing support (7) possesses receptacles (10, 11; 38, 39; 54) in order to connect workpieces detachably indirectly or directly to the fixing support (7).

17. Device according to claim 16, **characterised in that** the receptacles comprise hooking means (10, 11) which engage in corresponding receptacle seating surfaces (3, 4; 31, 32; 52, 53).

18. Device according to claim 16 or 17 **characterised in that** the receptacles (10, 11; 38, 39; 54) are fitted to the fixing support (7) in such a way that their position with respect to a vertical direction is alterable.

19. Device according to claim 16 or 17, **characterised in that** the receptacles assume a position which in the translation motion of the fixing support (7) remains unchanged with respect to a vertical direction.

20. Device according to any of the preceding claims, **characterised in that** the guide device (5) consists of guide rails (5).

## Revendications

1. Dispositif de traitement de surface de carrosseries de véhicule dans des bains de traitement ou des cabines de traitement, comprenant :
- au moins un bâti de fixation (7) pour recevoir une ou plusieurs carrosseries de véhicule (1), qui
- est déplaçable de façon continue le long d'une direction de déplacement, prédéterminée par l'agencement du bain de traitement (20) ou de la cabine (70), des carrosseries de véhicule (1),
- comprend un dispositif support (10, 11 ; 38 39 ; 54), à l'aide duquel la carrosserie de véhicule (1) est susceptible d'être montée de façon désolidarisable sur le bâti de fixation (7), et
- présente un axe de rotation (13, 41, 61), disposé transversalement par rapport à la direction de déplacement,
- un dispositif d'actionnement (22, 23) pour le déplacement avec mise en rotation du bâti de fixation (7) autour de son axe de rotation (13, 41, 61), où, pendant le processus de rotation, le dispositif d'actionnement (22, 23) et le bâti de fixation (7) sont couplés en permanence ensemble, de manière que l'insertion ou la sortie, par rotation, des carrosseries de véhicule, dans ou hors d'une zone de traitement, soit commandée et guidée à tout moment et que lors de l'introduction et de la sortie de la carrosserie de véhicule (1), dans, respectivement hors de, la zone de traitement, la vitesse de rotation et la vitesse de déplacement soient mutuellement adaptées, de manière que la partie avant de la carrosserie de véhicule (1) après achèvement du processus de rotation, en respectant un intervalle de sécurité, soit positionnée sur une première paroi frontale (201) de la zone de traitement (20, 70), et la carrosserie de véhicule (1) à présent est déplacée, avec la partie avant actuelle, de nouveau, en respectant un intervalle de sécurité, jusqu'à l'autre paroi frontale (202), avant que celle-ci, par une autre rotation d'environ 180°, soit sortie de la zone de traitement.
- un dispositif de guidage (5), à l'aide duquel le bâti de fixation (7) peut être guidé dans la direction de déplacement, et
- un moyen d'entraînement, à l'aide duquel le bâti de fixation (7) est déplaçable continûment dans la direction de déplacement.

2. Dispositif selon la revendication 1, **caractérisé en ce que** le bâti de fixation (7) présente au moins un levier (15) fixé latéralement, coopérant avec un guidage (22, 23), pour provoquer la rotation du bâti de fixation (7).

3. Dispositif selon la revendication 1 ou 2, **caractérisé en ce que**, chaque fois sur des côtés opposés du bâti de fixation (7), est monté au moins un levier (15), les leviers (15) opposés étant déplacés l'un par rapport à l'autre, de la valeur d'un angle prédéterminé.

4. Dispositif selon l'une des revendications 1 à 3, **caractérisé en ce que** de chaque côté du bâti de fixation (7) sont disposés deux leviers (15), les leviers (15) étant disposés chaque fois sur un côté du bâti de fixation (7), et les dispositifs à leviers étant déplacés à 90° sur les côtés opposés.

5. Dispositif selon la revendication 1 et l'une des revendications 2 à 4, **caractérisé en ce que** le dispositif d'actionnement (22, 23) coopère avec un ou plusieurs leviers (15).

6. Dispositif selon la revendication 5, **caractérisé en ce que** le dispositif d'actionnement (22, 23) comprend au moins une glissière de guidage (22, 23).

7. Dispositif selon la revendication 6, **caractérisé en ce que** la glissière de guidage (22, 23), dans la zone d'entrée ou de sortie d'un bain de traitement (20), présente des faces de guidage convenant pour produire la mise en rotation du bâti de fixation (7).

8. Dispositif selon la revendication 7, **caractérisé en ce que** les surfaces de guidage présentent des tronçons de guidage, inclinés vers le haut et vers le bas.

9. Dispositif selon la revendication 8, **caractérisé en ce que** les différents tronçons de guidage sont inclinés vers le bas d'environ 45°, d'autres tronçons de guidage sont inclinés vers le haut d'environ 45°.

10. Dispositif selon l'une des revendications 6 à 9, **caractérisé en ce que** les glissières de guidage (22, 23), ou leurs faces de guidage, arrivent en contact avec des éléments de contact (12) montés à l'extrémité des leviers (15).

11. Dispositif selon l'une des revendications 2 à 10, **caractérisé en ce qu'**un galet (12, 40, 57, 58) est disposé à l'extrémité d'un levier (15) pour assurer un guidage.

12. Dispositif selon la revendication 1, **caractérisé en ce que**, chaque fois, un dispositif d'actionnement ayant la forme d'un moteur est associé à un bâti de fixation (7).

13. Dispositif selon la revendication 1, **caractérisé en ce que** le dispositif d'actionnement est formé d'une crémaillère ou d'une broche filetée, montée rigidement dans la zone d'entrée ou de sortie d'un bain de traitement (20) et coopère avec des roues dentées ou des vis de configuration correspondante, sur le bâti de fixation (7).

14. Dispositif selon l'une des revendications 1 à 13, **caractérisé en ce que** le bâti de fixation (7) est guidé dans le dispositif de guidage (5) à l'aide de moyens de guidage disposés dans la zone de son axe de rotation (13, 41, 61).

15. Dispositif selon la revendication 14, **caractérisé en ce que** les moyens de guidage comprennent des galets.

16. Dispositif selon l'une des revendications 1 à 15, **caractérisé en ce que** le bâti de fixation (7) présente des logements (10, 11 ; 38, 39 ; 54), pour relier de façon désolidarisable, directement ou indirectement, des pièces d'oeuvre au bâti de fixation (7).

17. Dispositif selon la revendication 16, **caractérisé en ce que** les logements comprennent des moyens d'accrochage (10, 11), s'engageant dans des faces de placement en logement (3, 4 ; 31, 32 ; 52, 53) correspondantes.

18. Dispositif selon la revendication 16 ou 17, **caractérisé en ce que** les logements (10, 11 ; 38, 39 ; 54) sont montés sur le bâti de fixation (7), de manière que leurs positions géographiques par rapport à une direction verticale soient modifiables.

19. Dispositif selon la revendication 16 ou 17, **caractérisé en ce que** les logements prennent une position géographique restant inchangée, par rapport à une direction verticale, lors du déplacement en translation du bâti de fixation (7).

20. Dispositif selon l'une des revendications précédentes, **caractérisé en ce que** le dispositif de guidage (5) est formé de glissières de guidage (5).
